(19) Europäisches Patentamt

European Patent Office

Office européen des brevets

(11) **EP 0 828 596 B1**

(12) **EUROPÄISCHE PATENTSCHRIFT**

(45) Veröffentlichungstag und Bekanntmachung des Hinweises auf die Patenterteilung:
**01.09.1999 Patentblatt 1999/35**

(21) Anmeldenummer: **96919791.2**

(22) Anmeldetag: **21.05.1996**

(51) Int. Cl.$^6$: **B29C 43/22**, B29C 47/88
// B29K67:00

(86) Internationale Anmeldenummer:
**PCT/EP96/02174**

(87) Internationale Veröffentlichungsnummer:
**WO 96/38282 (05.12.1996 Gazette 1996/53)**

(54) **AMORPHE, TRANSPARENTE PLATTE AUS EINEM KRISTALLISIERBAREN THERMOPLAST**

AMORPHOUS TRANSPARENT PLATE MADE OF CRYSTALLISABLE THERMOPLASTIC MATERIALS

PLAQUE TRANSPARENTE AMORPHE EN UNE MATIERE THERMOPLASTIQUE CRISTALLISABLE

(84) Benannte Vertragsstaaten:
**AT BE DE DK ES FR GB IE IT LU NL SE**

(30) Priorität: **29.05.1995 DE 19519579**

(43) Veröffentlichungstag der Anmeldung:
**18.03.1998 Patentblatt 1998/12**

(73) Patentinhaber: **Hostaglas Ltd.**
**Dublin 24 (IE)**

(72) Erfinder:
• **MURSCHALL, Ursula**
**D-55283 Nierstein (DE)**
• **GAWRISCH, Wolfgang**
**D-55296 Gau-Bischofsheim (DE)**
• **BRUNOW, Rainer**
**D-65817 Eppstein (DE)**

(74) Vertreter:
**Grünecker, Kinkeldey,**
**Stockmair & Schwanhäusser**
**Anwaltssozietät**
**Maximilianstrasse 58**
**80538 München (DE)**

(56) Entgegenhaltungen:
**US-A- 4 230 656**

• **PATENT ABSTRACTS OF JAPAN vol. 017, no. 074 (M-1366), 15.Februar 1993 & JP,A,04 275125 (DAINIPPON PRINTING CO LTD), 30.September 1992,**
• **KUNSTSTOFFE, Bd. 80, Nr. 1, 1.Januar 1990, Seiten 21-25, XP000161515 MUELLER W ET AL: "IN-LINE-HERSTELLUNG VON PLATTEN UND FOLIEN"**

**Beschreibung**

Die Erfindung betrifft eine amorphe, transparente Platte aus einem kristallisierbaren Thermoplast, deren Dicke im Bereich von 1 bis 20 mm liegt. Die Platte zeichnet sich durch sehr gute optische und mechanische Eigenschaften aus. Die Erfindung betrifft ferner ein Verfahren zur Herstellung dieser Platte und ihre Verwendung.

Amorphe, transparente Platten mit einer Dicke zwischen 1 und 20 mm sind hinreichend bekannt. Diese flächigen Gebilde bestehen aus amorphen, nicht kristallisierbaren Thermoplasten. Typische Beispiele für derartige Thermoplaste, die zu Platten verarbeitet werden, sind z.B. Polyvinylchlorid (PVC), Polycarbonat (PC) und Polymethylmethacrylat (PMMA). Diese Halbzeuge werden auf sogenannten Extrusionsstraßen hergestellt (vgl. Polymer Werkstoffe, Band II, Technologie 1, S. 136, Georg Thieme Verlag, Stuttgart, 1984). Das Aufschmelzen des pulver- oder granulatförmigen Rohstoffes erfolgt in einem Extruder. Die amorphen Thermoplaste sind nach der Extrusion infolge der mit abnehmender Temperatur stetig steigenden Viskosität leicht über Glättwerke oder andere Ausformwerkzeuge umzuformen. Amorphe Thermoplaste besitzen dann nach der Ausformung eine hinreichende Stabilität, d. h. eine hohe Viskosität, um im Kalibrierwerkzeug "von selbst zu stehen". Sie sind aber noch weich genug um sich vom Werkzeug formen zu lassen. Die Schmelzviskosität und Eigensteife von amorphen Thermoplasten ist im Kalibrierwerkzeug so hoch, daß das Halbzeug nicht vor dem Abkühlen im Kalibrierwerkzeug zusammenfällt. Bei leicht zersetzbaren Werkstoffen wie z. B. PVC sind bei der Extrusion besondere Verarbeitungshilfen, wie z. B. Verarbeitungsstabilisatoren gegen Zersetzung und Gleitmittel gegen zu hohe innere Reibung und damit unkontrollierbare Erwärmung notwendig. Äußere Gleitmittel sind erforderlich um das Hängenbleiben an Wänden und Walzen zu verhindern.

Bei der Verarbeitung von PMMA wird z. B. zwecks Feuchtigkeitsentzug ein Entgasungsextruder eingesetzt.

Bei der Herstellung von transparenten Platten aus amorphen Thermoplasten sind z. T. kostenintensive Additive erforderlich, die teilweise migrieren und zu Produktionsproblemen infolge von Ausdampfungen und zu Oberflächenbelägen auf dem Halbzeug führen können. PVC-Platten sind schwer oder nur mit speziellen Neutralisations- bzw. Elektrolyseverfahren recyklierbar. PC- und PMMA-Platten sind ebenfalls schlecht und nur unter Verlust oder extremer Verschlechterung der mechanischen Eigenschaften recyklierbar.

Neben diesen Nachteilen besitzen PMMA-Platten auch eine extrem schlechte Schlagzähigkeit und zersplittern bei Bruch oder mechanischer Belastung. Daneben sind PMMA-Platten leicht brennbar, so daß sie beispielsweise für Innenanwendungen und im Messebau nicht eingesetzt werden dürfen.

PMMA- und PC-Platten sind außerdem nicht kaltformbar. Beim Kaltformen zerbrechen PMMA-Platten in gefährliche Splitter. Beim Kaltformen von PC-Platten treten Haarrisse und Weißbruch auf.

In der EP-A-0 471 528 wird ein Verfahren zum Formen eines Gegenstandes aus einer Polyethylenterephthalat (PET)-Platte beschrieben. Die PET-Platte wird in einer Tiefziehform beidseitig in einem Temperaturbereich zwischen der Glasübergangstemperatur und der Schmelztemperatur wärmebehandelt. Die geformte PET-Platte wird aus der Form herausgenommen, wenn das Ausmaß der Kristallisation der geformten PET-Platte im Bereich von 25 bis 50 % liegt. Die in der EP-A-0 471 528 offenbarten PET-Platten haben eine Dicke von 1 bis 10 mm. Da der aus dieser PET-Platte hergestellte, tiefgezogene Formkörper teilkristallin und damit nicht mehr transparent ist und die Oberflächeneigenschaften des Formkörpers durch das Tiefziehverfahren, die dabei gegebenen Temperaturen und Formen bestimmt werden, ist es unwesentlich, welche optischen Eigenschatten (z. B. Glanz, Trübung und Lichttransmission) die eingesetzten PET-Platten besitzen. In der Regel sind die optischen Eigenschaften dieser Platten schlecht und optimierungsbedürftig.

In der US-A-3,496,143 wird das Vakuum-Tiefziehen einer 3 mm dicken PET-Platte, deren Kristallisation im Bereich von 5 bis 25 % liegen soll, beschrieben. Die Kristallinität des tiefgezogenen Formkörpers ist jedoch größer als 25 %. Auch an diese PET-Platten werden keine Anforderungen hinsichtlich der optischen Eigenschaften gestellt. Da die Kristallinität der eingesetzten Platten bereits zwischen 5 und 25 % liegt, sind diese Platten trüb und undurchsichtig.

Aufgabe der vorliegenden Erfindung ist es, eine amorphe, transparente Platte mit einer Dicke von 1 bis 20 mm bereitzustellen, die sowohl gute mechanische als auch optische Eigenschaften aufweist.

Zu den guten optischen Eigenschaften zählt beispielsweise eine hohe Lichttransmission, ein hoher Oberflächenglanz, eine extrem niedrige Trübung sowie eine hohe Bildschärfe (Clarity).

Zu den guten mechanischen Eigenschaften zählt unter anderem eine hohe Schlagzähigkeit sowie eine hohe Bruchfestigkeit.

Darüber hinaus sollte die erfindungsgemäße Platte recyklierbar sein, insbesondere ohne Verlust der mechanischen Eigenschaften, sowie schwer brennbar, damit sie beispielsweise auch für Innenanwendungen und im Messebau eingesetzt werden kann.

Gelöst wird diese Aufgabe durch eine transparente, amorphe Platte mit einer Dicke im Bereich von 1 bis 20 mm, die als Hauptbestandteil einen kristallisierbaren Thermoplasten enthält, wobei der Oberflächenglanz, gemessen nach DIN 67530 (Meßwinkel 20 °), größer als 130, vorzugsweise größer als 140 ist, die Lichttransmission, gemessen nach ASTM D 1003 mehr als 84 %, vorzugsweise mehr als 86 % beträgt, und die Trübung der Platte, gemessen nach ASTM D 1003 weniger als 15 %, vorzugsweise weniger als 11 % beträgt.

Die transparente, amorphe Platte enthält als Hauptbestandteil einen kristallisierbaren Thermoplasten. Geeignete kristallisierbare bzw. teilkristalline

Thermoplaste sind beispielsweise Polyethylenterephthalat, Polybutylenterephthalat, Cycloolefin- und Cycloolefincopolymere, wobei Polyethylenterephthalat besonders bevorzugt ist.

Erfindungsgemäß versteht man unter kristallisierbarem Thermoplast

- kristallisierbare Homopolymere,
- kristallisierbare Copolymere,
- kristallisierbare Compounds,
- kristallisierbares Recyklat und
- andere Variationen von kristallisierbarem Thermoplast.

Unter amorpher Platte werden im Sinne der vorliegenden Erfindung solche Platten verstanden, die, obwohl der eingesetzte kristallisierbare Thermoplast vorzugsweise eine Kristallinität zwischen 25 und 65 % besitzt, nicht kristallin sind. Nicht kristallin, d. h. im wesentlichen amorph bedeutet, daß der Kristallinitätsgrad im allgemeinen unter 5 %, vorzugsweise unter 2 % liegt und besonders bevorsugt 0 % beträgt.

Im Fall von Polyethylenterephthalat tritt bei der Messung der Schlagzähigkeit $a_n$ nach Charpy (gemessen nach ISO 179/1 D) an der Platte vorzugsweise kein Bruch auf. Darüber hinaus liegt die Kerbschlagfestigkeit $a_k$ nach Izod (gemessen nach ISO 180/1A) der Platte vorzugsweise im Bereich von 2,0 bis 8,0 kJ/m$^2$, besonders bevorzugt im Bereich von 4,0 bis 6,0 kJ/m$^2$.

Die Bildschärfe der Platte, die auch Clarity genannt wird, und unter einem Winkel kleiner als 2,5 ° ermittelt wird (ASTM D 1003), liegt vorzugsweise über 96 % und besonders bevorzugt über 97 %.

Polyethylenterephthalat-Polymere mit einem Kristallitschmelzpunkt $T_m$, gemessen mit DSC (Differential Scanning Calorimetry) mit einer Aufheizgeschwindigkeit von 10 °C/min, von 220 °C bis 280 °C, vorzugsweise von 250 °C bis 270 °C, mit einem Kristallisationstemperaturbereich $T_c$ zwischen 75 °C und 280 °C, einer Glasübergangstemperatur $T_g$ zwischen 65 °C und 90 °C und mit einer Dichte, gemessen nach DIN 53479, von 1,30 bis 1,45 und einer Kristallinität zwischen 5 % und 65 %, vorzugsweise 25 % und 65 %, stellen als Ausgangsmaterialien zur Herstellung der Platte bevorzugte Polymere dar.

Die Standardviskosität SV (DCE) des Polyethylenterephthalats, gemessen in Dichloressigsäure nach DIN 53728, liegt zwischen 800 und weniger als 1800, insbesondere zwischen 800 und 1400, vorzugsweise zwischen 950 und 1250 und besonders bevorzugt zwischen 1000 und 1200.

Die intrinsische Viskosität IV (DCE) berechnet sich wie folgt aus der Standardviskosität SV (DCE):

$$IV\ (DCE) = 6,67 \cdot 10^{-4}\ SV\ (DCE) + 0,118$$

Das Schüttgewicht, gemessen nach DIN 53466, liegt vorzugsweise zwischen 0,75 kg/dm$^3$ und 1,0 kg/dm$^3$, und besonders bevorzugt zwischen 0,80 kg/dm$^3$ und 0,90 kg/dm$^3$.

Die Polydispersität des Polyethylenterephthalats $M_w/M_n$ gemessen mittels GPC liegt vorzugsweise zwischen 1,5 und 6,0 und besonders bevorzugt zwischen 2,0 und 3,5.

Daneben wurde völlig unerwartet eine gute Kaltformbarkeit ohne Bruch, ohne Haarrisse und/oder ohne Weißbruch festgestellt, so daß die erfindungsgemäße Platte ohne Temperatureinwirkung verformt und gebogen werden kann.

Darüber hinaus ergaben Messungen, daß die erfindungsgemäße Platte schwer brennbar und schwer entflammbar ist, so daß sie sich beispielsweise für Innenanwendungen und im Messebau eignet.

Desweiteren ist die erfindungsgemäße Platte ohne Umweltbelastung und ohne Verlust der mechanischen Eigenschaften problemlos recyklierbar, wodurch sie sich beispielsweise für die Verwendung als kurzlebige Werbeschilder oder anderer Werbeartikel eignet.

Die Herstellung der erfindungsgemäßen, transparenten, amorphen Platte kann beispielsweise nach einem Extrusionsverfahren in einer Extrusionsstraße erfolgen.

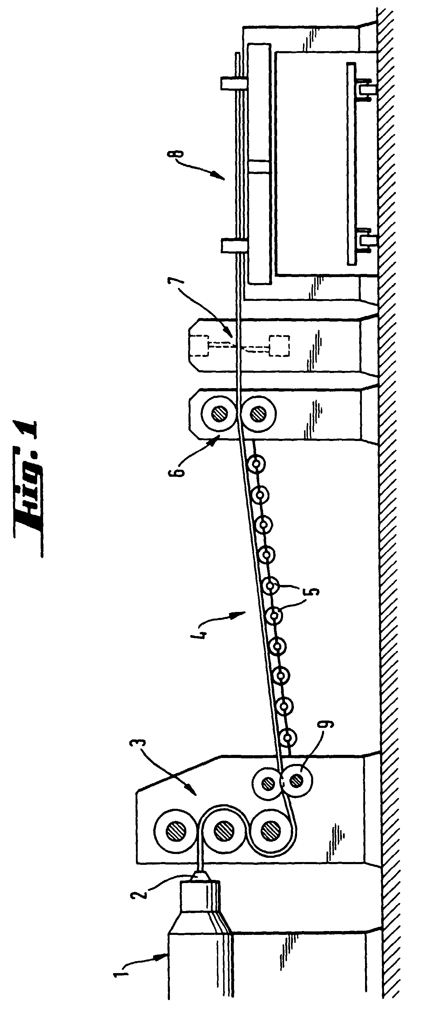

Eine derartige Extrusionsstraße ist in Fig. 1 schematisch dargestellt. Sie umfaßt im wesentlichen

- (1) einen Extruder als Plastifizierungsanlage,
- (2) eine Breitschlitzdüse als Werkzeug zum Ausformen,
- (3) ein Glättwerk/Kalander als Kalibrierwerkzeug,
- (4) ein Kühlbett und/oder eine Rollenbahn zur Nachkühlung,
- (6) einen Walzenabzug,
- (7) eine Trennsäge,
- eine Seitenschneideinrichtung, und gegebenenfalls

- (8) eine Stapelvorrichtung

Das Verfahren zur Herstellung der erfindungsgemäßen Platte wird im folgenden am Beispiel von Polyethylenterephthalat ausführlich beschrieben.

Das Verfahren ist dadurch gekennzeichnet, daß man das Polyethylenterephthalat gegebenenfalls trocknet, dann im Extruder aufschmilzt, die Schmelze durch eine Düse ausformt und anschließend im Glättwerk kalibriert, glättet und kühlt, bevor man die Platte auf Maß bringt.

Die Trocknung des Polyethylenterephthalates vor der Extrusion erfolgt vorzugsweise für 4 bis 6 Stunden bei 160 bis 180 °C.

Das Polyethylenterephthalat wird danach im Extruder aufgeschmolzen. Vorzugsweise liegt die Temperatur der PET-Schmelze im Bereich von 250 bis 320 °C, wobei die Temperatur der Schmelze im wesentlichen sowohl durch die Temperatur des Extruders, als auch die Verweilzeit der Schmelze im Extruder eingestellt werden kann.

Die Schmelze verläßt den Extruder dann durch eine Düse. Diese Düse ist vorzugsweise eine Breitschlitzdüse.

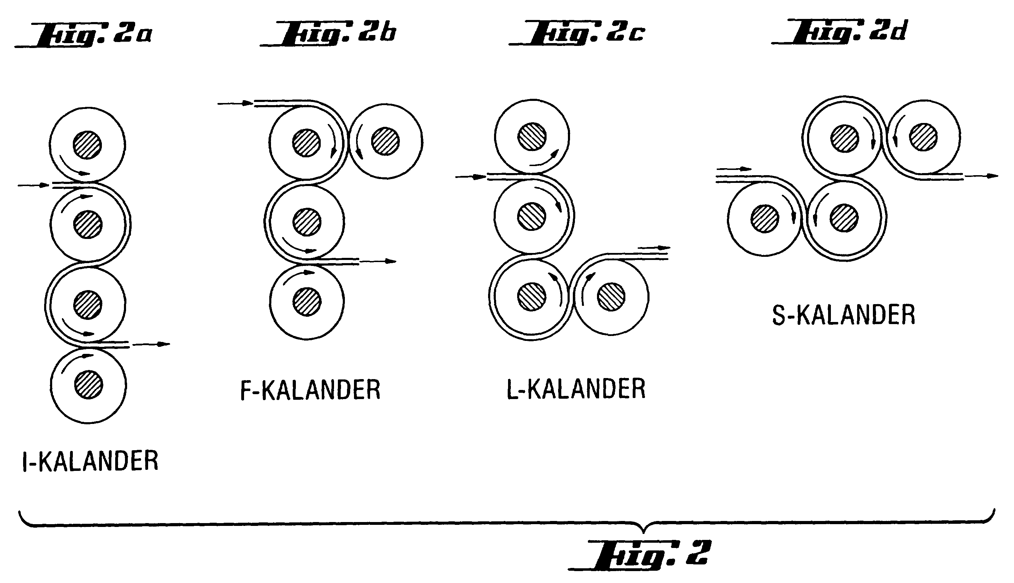

Das vom Extruder aufgeschmolzene und von einer Breitschlitzdüse ausgeformte PET wird von Glättkalanderwalzen kalibriert, d. h. intensiv gekühlt und geglättet. Die Kalanderwalzen können beispielsweise in einer I-, F-, L- oder S-Form angeordnet sein (siehe Fig. 2).

Das PET-Material kann dann anschließend auf einer Rollenbahn (5) nachgekühlt, seitlich auf Maß geschnitten, abgelängt und schließlich gestapelt werden.

Die Dicke der PET-Platte wird im wesentlichen vom Abzug, der am Ende der Kühlzone angeordnet ist, den mit ihm geschwindigkeitsmäßig gekoppelten Kühl-(Glätt-)Walzen und der Fördergeschwindigkeit des Extruders einerseits und dem Abstand der Walzen andererseits bestimmt.

Als Extruder können sowohl Einschnecken- als auch Zweischneckenextruder eingesetzt werden.

Die Breitschlitzdüse besteht vorzugsweise aus dem zerlegbaren Werkzeugkörper, den Lippen und dem Staubalken zur Fließregulierung über die Breite. Dazu kann der Staubalken durch Zug- und Druckschrauben verbogen werden. Die Dickeneinstellung erfolgt durch Verstellen der Lippen. Wichtig ist es auf eine gleichmäßige Temperatur des PET und der Lippe zu achten, da sonst die PET-Schmelze durch die unterschiedlichen Fließwege verschieden dick ausfließt.

Das Kalibrierwerkzeug, d. h. der Glättkalander gibt der PET-Schmelze die Form und die Abmessungen. Dies geschieht durch Einfrieren unterhalb der Glasübergangstemperatur mittels Abkühlung und Glätten. Verformt werden sollte in diesem Zustand nicht mehr, da sonst in diesem abgekühlten Zustand Oberflächenfehler entstehen würden. Aus diesem Grund werden die Kalanderwalzen vorzugsweise gemeinsam angetrieben. Die Temperatur der Kalanderwalzen muß zwecks Vermeidung des Anklebens der PET-Schmelze kleiner als die Kristallitschmelztemperatur sein. Die PET-Schmelze verläßt mit einer Temperatur von 240 bis 300 °C die Breitschlitzdüse. Die erste Glätt-Kühl-Walze hat je nach Ausstoß und Plattendicke eine Temperatur zwischen 50 °C und 80 °C. Die zweite etwas kühlere Walze kühlt die zweite oder andere Oberfläche ab.

Um eine amorphe Platte mit einer Dicke von 1 mm bis 20 mm zu erhalten, ist es wesentlich, daß die Temperatur der ersten Glätt-Kühl-Walze zwischen 50 °C und 80 °C liegt.

Während die Kalibriereinrichtung die PET-Oberflächen möglichst glatt zum Einfrieren bringt und das Profil so weit abkühlt, daß es formsteif ist, senkt die Nachkühleinrichtung die Temperatur der PET-Platte auf nahezu Raumtemperatur ab. Die Nachkühlung kann auf einem Rollenbrett erfolgen. Die Geschwindigkeit des Abzugs sollte mit der Geschwindigkeit der Kalanderwalzen genau abgestimmt sein, um Defekte und Dickenschwankungen zu vermeiden.

Als Zusatzeinrichtungen kann sich in der Extrusionsstraße zur Herstellung von Platten eine Trennsäge als Ablängeinrichtung, die Seitenbeschneidung, die Stapelanlage und eine Kontrollstelle befinden. Die Seiten- oder Randbeschneidung ist vorteilhaft, da die Dicke im Randbereich unter Umständen ungleichmäßig sein kann. An der Kontrollstelle werden Dicke und Optik der Platte gemessen.

Durch die überraschende Vielzahl ausgezeichneter Eigenschaften eignet sich die erfindungsgemäße, transparente und amorphe Platte hervorragend für eine Vielzahl verschiedener Verwendungen, beispielsweise für Innenraumverkleidung, für Messebau und Messeartikel, als Displays, für Schilder, für Schutzverglasung von Maschinen und Fahrzeugen, im Beleuchtungssektor, im Laden- und Regalbau, als Werbeartikel, als Menükartenständer und als Basketball-Zielbretter.

Die Erfindung wird im folgenden anhand von Ausführungsbeispielen näher erläutert, ohne dadurch beschränkt zu werden.

Die Messung der einzelnen Eigenschaften erfolgt dabei gemäß der folgenden Normen bzw. Verfahren.

Meßmethoden

Oberflächenglanz:

Der Oberflächenglanz wird bei einem Meßwinkel von 20 ° nach DIN 67530 gemessen.

Lichttransmission:

Unter der Lichttransmission ist das Verhältnis des insgesamt durchgelassenen Lichtes zur einfallenden Lichtmenge zu verstehen.
Die Lichttransmission wird mit dem Meßgerät "Hazegard plus" nach ASTM 1003 gemessen.

Trübung und Clarity:

Trübung ist der prozentuale Anteil des durchgelassenen Lichtes, der vom eingestrahlten Lichtbündel im Mittel um mehr als 2,5 ° abweicht. Die Bildschärfe wird unter einem Winkel kleiner als 2,5 ° ermittelt.
Die Trübung und die Clarity werden mit dem Meßgerät "Hazegard plus" nach ASTM 1003 gemessen.

Oberflächendefekte:

Die Oberflächendefekte werden visuell bestimmt.

Schlagzähigkeit $a_n$ nach Charpy:

Diese Größe wird nach ISO 179/1D ermittelt.

Kerbschlagzähigkeit $a_k$ nach Izod:

Die Kerschlagzähigkeit bzw. -festigkeit $a_k$ nach Izod wird nach ISO 180/1A gemessen.

Dichte:

Die Dichte wird nach DIN 53479 bestimmt.

SV (DCE), IV (DCE):

Die Standardviskosität SV (DCE) wird angelehnt an DIN 53726 in Dichloressigsäure gemessen.
Die intrinsische Viskosität (IV) berechnet sich wie folgt aus der Standardviskosität (SV)

$$IV (DCE) = 6,67 \cdot 10^{-4} \, SV (DCE) + 0,118$$

Thermische Eigenschaften:

Die thermischen Eigenschaften wie Kristallitschmelzpunkt $T_m$, Kristallisationstemperaturbereich $T_c$, Nach- (Kalt-)Kristallisationstemperatur $T_{CN}$ und Glasübergangstemperatur $T_g$ werden mittels Differential Scanning Calorimetrie (DSC) bei einer Aufheizgeschwindigkeit von 10 °C/min gemessen.

Molekulargewicht, Polydispersität:

Die Molekulargewichte $M_w$ und $M_n$ und die resultierende Polydispersität $M_w/M_n$ werden mittels Gelpermeati- onschromatographie (GPC) gemessen.
In den nachstehenden Beispielen und Vergleichsbeispielen handelt es sich jeweils um einschichtige, transparente Platten unterschiedlicher Dicke die auf der beschriebenen Extrusionsstraße hergestellt werden.

Beispiel 1:

Das Polyethylenterephthalat, aus dem die transparente Platte hergestellt wird, hat eine Standardviskosität SV (DCE) von 1010, was einer intrinsischen Viskosität IV (DCE) von 0,79 dl/g entspricht. Der Feuchtigkeitsgehalt liegt bei < 0,2 % und die Dichte (DIN 53479) bei 1,41 g/cm$^3$. Die Kristallinität beträgt 59 %, wobei der Kristallitschmelzpunkt nach DSC-Messungen bei 258 °C liegt. Der Kristallisationstemperaturbereich $T_c$ liegt zwischen 83 °C und 258 °C, wobei die Nachkristallisationstemperatur (auch Kaltkristallisationstemperatur) $T_{CN}$ bei 144 °C liegt. Die Polydispersität $M_w/M_n$ des Polyethylenterephthalat-Polymeren beträgt 2, 14.

Die Glasübergangstemperatur liegt bei 83 °C.

Vor der Extrusion wird das Polyethylenterephthalat mit einer Kristallinität von 59 % 5 Stunden bei 170 °C in einem Trockner getrocknet und dann in einem Einschneckenextruder bei einer Extrusionstemperatur von 286 °C durch eine Breitschlitzdüse auf einen Glättkalander dessen Walzen S-förmig angeordnet sind, extrudiert und zu einer 2 mm dicken Platte geglättet. Die erste Kalanderwalze hat eine Temperatur von 73 °C und die nachfolgenden Walzen haben jeweils eine Temperatur von 67 °C. Die Geschwindigkeit des Abzuges und der Kalanderwalzen liegt bei 6,5 m/min.

Im Anschluß an die Nachkühlung wird die transparente, 2 mm dicke PET-Platte mit Trennsägen an den Rändern gesäumt, abgelängt und gestapelt.

Die hergestellte transparente PET-Platte hat folgendes Eigenschaftsprofil:

| | |
|---|---|
| - Dicke | 2 mm |
| - Oberflächenglanz 1. Seite | 200 |
| (Meßwinkel 20 °) 2. Seite | 198 |
| - Lichttransmission | 91 % |
| - Clarity (Klarheit) | 100% |
| - Trübung | 1,5% |
| - Oberflächendefekte pro m$^2$ (Stippen, Orangenhaut, Blasen usw.) | keine |
| - Schlagzähigkeit $a_n$ nach Charpy | kein Bruch |
| - Kerbschlagzähigkeit $a_k$ nach Izod | 4,2 kJ/m$^2$ |
| - Kaltformbarkeit | gut, keine Defekte |
| - Kristallinität | 0% |
| -Dichte | 1,33 g/cm$^3$ |

Beispiel 2:

Analog Beispiel 1 wird eine transparente Platte hergestellt, wobei ein Polyethylenterephthalat eingesetzt wird, das folgende Eigenschaften aufweist:

| | |
|---|---|
| SV (DCE) | 1100 |
| IV (DCE) | 0,85 dl/g |
| Dichte | 1,38 g/cm$^3$ |
| Kristallinität | 44 % |
| Kristallitschmelzpunkt $T_m$ | 245 °C |
| Kristallisationstemperaturbereich $T_c$ | 82 °C bis 245 °C |
| Nach-(Kalt-)Kristallisationstemperatur $T_{CN}$ | 152 °C |
| Polydispersität $M_w/M_n$ | 2,02 |
| Glasübergangstemperatur | 82 °C |

Die Extrusionstemperatur liegt bei 280 °C. Die erste Kalanderwalze hat eine Temperatur von 66 °C und die nachfolgenden Walzen haben eine Temperatur von 60 °C. Die Geschwindigkeit des Abzuges und der Kalanderwalze liegt bei 2,9 m/min.

Die hergestellte transparente PET-Platte hat folgendes Eigenschaftsprofil:

| | |
|---|---|
| -Dicke | 6 mm |
| - Oberflächenglanz 1. Seite | 172 |
| (Meßwinkel 20 °) 2. Seite | 170 |
| - Lichttransmission | 88,1 % |
| - Clarity (Klarheit) | 99,6 % |
| - Trübung | 2,6 % |
| - Oberflächendefekte pro $m^2$ (Stippen, Orangenhaut, Blasen usw.) | keine |
| - Schlagzähigkeit $a_n$ nach Charpy | kein Bruch |
| - Kerbschlagzähigkeit $a_k$ nach Izod | 4,8 kJ/$m^2$ |
| - Kaltformbarkeit | gut, keine Defekte |
| -Kristallinität | 0 % |
| -Dichte | 1,33 g/$cm^3$ |

Beispiel 3:

Analog Beispiel 2 wird eine transparente Platte hergestellt. Die Extrusionstemperatur liegt bei 275 °C. Die erste Kalanderwalze hat eine Temperatur von 57 °C und die nachfolgenden Walzen haben eine Temperatur von 50 °C. Die Geschwindigkeit des Abzuges und der Kalanderwalze liegt bei 1,7 m/min.

Die hergestellte PET-Platte hat folgendes Eigenschaftsprofil:

| | |
|---|---|
| -Dicke | 10mm |
| - Oberflächenglanz 1. Seite | 163 |
| (Meßwinkel 20 °) 2. Seite | 161 |
| - Lichttransmission | 86,5 % |
| - Clarity (Klarheit) | 99,2 % |
| - Trübung | 4,95 % |
| - Oberflächendefekte pro $m^2$ (Stippen, Orangenhaut, Blasen usw.) | keine |
| - Schlagzähigkeit $a_n$ nach Charpy | kein Bruch |
| - Kerbschlagzähigkeit $a_k$ nach Izod | 5,1 kJ/$m^2$ |
| - Kaltformbarkeit | gut, keine Defekte |
| - Kristallinität | 0,1 % |
| - Dichte | 1,33 g/$cm^3$ |

Beispiel 4:

Analog Beispiel 3 wird eine transparente Platte hergestellt, wobei ein Polyethylenterephthalat eingesetzt wird, das folgende Eigenschaften aufweist:

| | |
|---|---|
| SV (DCE) | 1200 |
| IV (DCE) | 0,91 dl/g |
| Dichte | 1,37 g/cm$^3$ |
| Kristallinität | 36 % |
| Kristallitschmelzpunkt $T_m$ | 242 °C |
| Kristallisationstemperaturbereich $T_c$ | 82 °C bis 242 °C |
| Nach-(Kalt-)Kristallisationstemperatur $T_{CN}$ | 157 °C |
| Polydispersität $M_w/M_n$ | 2,2 |
| Glasübergangstemperatur | 82 °C |

Die Extrusionstemperatur liegt bei 274 °C. Die erste Kalanderwalze hat eine Temperatur von 50 °C und die nachfolgenden Walzen haben eine Temperatur von 45 °C. Die Geschwindigkeit des Abzuges und der Kalanderwalzen liegt bei 1,2 m/min.

Die hergestellte transparente PET-Platte hat folgendes Eigenschaftsprofil:

| | |
|---|---|
| - Dicke | 15 mm |
| - Oberflächenglanz 1. Seite | 144 |
| (Meßwinkel 20 °) 2. Seite | 138 |
| - Lichttransmission | 86,4 % |
| - Clarity (Klarheit) | 97,4 % |
| - Trübung | 10,5 % |
| - Oberflächendefekte pro m$^2$ (Stippen, Orangenhaut, Blasen usw.) | keine |
| - Schlagzähigkeit $a_n$ nach Charpy | kein Bruch |
| - Kerbschlagzähigkeit $a_k$ nach Izod | 5,1 kJ/m$^2$ |
| - Kaltformbarkeit | gut, keine Defekte |
| - Kristallinität | 0,1 % |
| - Dichte | 1,33 g/cm$^3$ |

Beispiel 5:

Analog Beispiel 2 wird eine transparente Platte hergestellt. 70 % Polyethylenterephthalat aus Beispiel 2 werden mit 30 % Recyklat aus diesem Polyethylenterephthalat abgemischt.

Die hergestellte transparente PET-Platte hat folgendes Eigenschaftsprofil:

| | |
|---|---|
| - Dicke | 6 mm |
| - Oberflächenglanz 1. Seite | 168 |
| (Meßwinkel 20 °) 2. Seite | 166 |
| - Lichttransmission | 88,0 % |

(fortgesetzt)

| | |
|---|---|
| - Clarity (Klarheit) | 99,4 % |
| - Trübung | 3,2 % |
| - Oberflächendefekte pro $m^2$ (Stippen, Orangenhaut, Blasen usw.) | keine |
| - Schlagzähigkeit $a_n$ nach Charpy | kein Bruch |
| - Kerbschlagzähigkeit $a_k$ nach Izod | 4,7 kJ/$m^2$ |
| - Kaltformbarkeit | gut, keine Defekte |
| -Kristallinität | 0 % |
| - Dichte | 1,33 g/$cm^3$ |

Vergleichsbeispiel 1:

Analog Beispiel 1 wird eine transparente Platte hergestellt. Das eingesetzte Polyethylenterephthalat hat eine Standardviskosität SV (DCE) von 760, was einer intrinsischen Viskosität IV (DCE) von 0,62 dl/g entspricht. Die übrigen Eigenschaften sind im Rahmen der Meßgenauigkeit mit den Eigenschaften des Polyethylenterephthalats aus Beispiel 1 identisch. Die Verfahrensparameter und die Temperatur wurden wie in Beispiel 1 gewählt. Infolge der niedrigen Viskosität ist keine Plattenherstellung möglich. Die Schmelzstabilität ist ungenügend, so daß die Schmelze vor dem Abkühlen auf den Kalanderwalzen zusammenfällt.

Vergleichsbeispiel 2:

Analog Beispiel 2 wird eine transparente Platte hergestellt, wobei auch das Polyethylenterephthalat aus Beispiel 2 eingesetzt wird. Die erste Kalanderwalze hat eine Temperatur von 83 °C und die nachfolgenden Walzen haben jeweils eine Temperatur von 77 °C.
Die hergestellte Platte ist extrem trüb. Die Lichttransmission, die Clarity und der Glanz sind deutlich reduziert. Die Platte zeigt Oberflächendefekte und Strukturen. Die Optik ist für eine transparente Anwendung unakzeptabel.
Die hergestellte Platte hat folgendes Eigenschaftsprofil

| | |
|---|---|
| - Dicke | 6 mm |
| - Oberflächenglanz 1. Seite | 95 |
| (Meßwinkel 20 °) 2. Seite | 93 |
| - Lichttransmission | 74 % |
| - Clarity (Klarheit) | 90 % |
| - Trübung | 52 % |
| - Oberflächendefekte pro $m^2$ (Stippen, Orangenhaut, Blasen usw.) | Blasen, Orangenhaut |
| - Schlagzähigkeit $a_n$ nach Charpy | kein Bruch |
| - Kerbschlagzähigkeit $a_k$ nach Izod | 5,0 kJ/$m^2$ |
| - Kaltformbarkeit | gut |
| - Kristallinität | ca. 8% |
| - Dichte | 1,34 g/$cm^3$ |

**Patentansprüche**

1.   Transparente, amorphe Platte, mit einer Dicke im Bereich von 1 bis 20 mm, die als Hauptbestandteil einen kristallisierbaren Thermoplasten enthält, wobei der Oberflächenglanz, gemessen nach DIN 67530 (Meßwinkel 20 °), größer als 130 ist, die Lichttransmission, gemessen nach ASTM D 1003, mehr als 84 % beträgt, und die Trübung der Platte, gemessen nach ASTM D 1003, weniger als 15 % beträgt.

2. Platte gemäß Anspruch 1, wobei der kristallisierbare Thermoplast ausgewählt ist unter Polyethylenterephthalat, Polybutylenterephthalat, ein Cycloolefin- und ein Cycloolefincopolymer verwendet wird.

3. Platte gemäß Anspruch 2, wobei als kristallisierbarer Thermoplast Polyethylenterephthalat verwendet wird.

4. Platte gemäß Anspruch 3, wobei das Polyethylenterephthalat, Polyethylenterephthalat-Recyklat enthält.

5. Platte gemäß Anspruch 3 oder 4, wobei bei der Messung der Schlagzähigkeit $a_n$ nach Charpy, gemessen nach ISO 179/1D kein Bruch auftritt.

6. Platte gemäß einem der Ansprüche 3 bis 5, wobei die Kerbschlagfestigkeit $a_k$ nach Izod, gemessen nach ISO 180/1A im Bereich von 2,0 bis 8,0 $kJ/m^2$ liegt.

7. Platte gemäß einem der Ansprüche 3 bis 6, wobei die Bildschärfe, gemessen nach ASTM D 1003 unter einem Winkel kleiner als 2,5 °, über 96 % liegt.

8. Platte gemäß einem der Ansprüche 3 bis 7, wobei das Polyethylenterephthalat einen Kristallitschmelzpunkt, gemessen durch DSC mit einer Aufheizgeschwindigkeit von 10 °C/min., im Bereich von 220 ° bis 280 °C aufweist.

9. Platte gemäß einem der Ansprüche 3 bis 8, wobei das Polyethylenterephthalat eine Kristallisationstemperatur, gemessen durch DSC mit einer Aufheizgeschwindigkeit von 10 °C/min., im Bereich von 75 ° bis 280 °C aufweist.

10. Platte gemäß einem der Ansprüche 3 bis 9, wobei das eingesetzte Polyethylenterephthalat eine Kristallinität aufweist die im Bereich von 5 bis 65 % liegt.

11. Platte gemäß einem der Ansprüche 3 bis 10, wobei das eingesetzte Polyethylenterephthalat eine Standardviskosität SV (DCE), gemessen in Dichloressigsäure nach DIN 53728, aufweist, die im Bereich von 800 bis weniger 1800 liegt.

12. Platte gemäß Anspruch 11, wobei das eingesetzte Polyethylenterephthalat eine Standardviskosität SV (DCE), gemessen in Dichloressigsäure nach DIN 53728, aufweist, die im Bereich von 800 bis 1400 liegt.

13. Platte gemäß einem der Ansprüche 1 bis 12, wobei die Platte einen Kristallinitätsgrad von weniger als 5 % hat.

14. Verfahren zur Herstellung einer transparenten, amorphen Platte gemäß einem der Ansprüche 1 bis 13, das die folgenden Schritte umfaßt: Aufschmelzen des kristallisierbaren Thermoplasten im Extruder, Ausformen der Schmelze durch eine Düse, und anschließend im Glättwerk, Kalibrieren, Glätten und Kühlen mit mindestens zwei Walzen, bevor die Platte auf Maß gebracht wird, wobei die erste Walze des Glättwerkes eine Temperatur aufweist, die im Bereich von 50 bis 80 °C liegt.

15. Verfahren gemäß Anspruch 14, wobei der kristallisierbare Thermoplast vor dem Aufschmelzen getrocknet wird.

16. Verfahren gemäß Anspruch 14 oder 15, wobei der kristallierbare Thermoplast Polyethylenterephthalat ist.

17. Verfahren gemäß Anspruch 16, wobei das Polyethylenterephthalat vor der Extrusion für 4 bis 6 Stunden bei 160 bis 180 °C getrocknet wird.

18. Verfahren gemäß Anspruch 16 oder 17, wobei die Temperatur der PET-Schmelze im Bereich von 250 bis 320 °C liegt.

19. Verwendung einer transparenten, amorphen Platte gemäß einem der Ansprüche 1 bis 13 für Innenanwendungen und im Messebau.

**Claims**

1. A transparent, amorphous sheet having a thickness in the range from 1 to 20 mm which contains, as principal constituent, a crystallizable thermoplastic, where the surface gloss, measured in accordance with DIN 67530 (measurement angle 20°), is greater than 130, the light transmission, measured in accordance with ASTM D 1003, is greater than 84%, and the haze of the sheet, measured in accordance with ASTM D 1003, is less than 15%.

2. A sheet as claimed in claim 1, where the crystallizable thermoplastic used is selected from polyethylene terephthalate, polybutylene terephthalate, a cycloolefin polymer and a cycloolefin copolymer.

3. A sheet as claimed in claim 2, where the crystallizable thermoplastic used is polyethylene terephthalate.

4. A sheet as claimed in claim 3, where the polyethylene terephthalate contains recycled polyethylene terephthalate.

5. A sheet as claimed in claim 3 or 4, where the measurement of the Charpy impact strength $a_n$, measured in accordance with ISO 179/1D, is not accompanied by a fracture.

6. A sheet as claimed in any one of claims 3 to 5, where the Izod notched impact strength $a_k$, measured in accordance with ISO 180/1A, is in the range from 2.0 to 8.0 $kJ/m^2$.

7. A sheet as claimed in any one of claims 3 to 6, where the clarity, measured in accordance with ASTM D 1003 at an angle of less than 2.5°, is greater than 96%.

8. A sheet as claimed in any one of claims 3 to 7, where the polyethylene terephthalate has a crystalline melting point, measured by DSC at a heating rate of 10°C/min, in the range from 220° to 280°C.

9. A sheet as claimed in any one of claims 3 to 8, where the polyethylene terephthalate has a crystallization temperature, measured by DSC at a heating rate of 10°C/min, in the range from 75° to 280°C.

10. A sheet as claimed in any one of claims 3 to 9, where the polyethylene terephthalate employed has a crystallinity in the range from 5 to 65%.

11. A sheet as claimed in any one of claims 3 to 10, wherein the polyethylene terephthalate employed has a standard viscosity SV (DCA), measured in dichloroacetic acid in accordance with DIN 53728, in the range from 800 to 1800.

12. A sheet as claimed in claim 11, where the polyethylene terephthalate employed has a standard viscosity SV (DCA), measured in dichloroacetic acid in accordance with DIN 53728, in the range from 800 to 1400.

13. A sheet as claimed in any one of claims 1 to 12, where the sheet has a degree of crystallinity of less than 5%.

14. A process for the production of a transparent, amorphous sheet as claimed in any one of claims 1 to 13 which comprises the following steps: melting of the crystallizable thermoplastic in the extruder, extrusion of the melt through a die, calibration, smoothing and cooling of the extrudate with at least two rolls in a polishing stack, and cutting of the sheet to size, where the first roll of the polishing stack has a temperature in the range from 50 to 80°C.

15. The process as claimed in claim 14, where the crystallizable thermoplastic is dried before melting.

16. The process as claimed in claim 14 or 15, where the crystallizable thermoplastic is polyethylene terephthalate.

17. The process as claimed in claim 16, where the polyethylene terephthalate is dried at from 160 to 180°C for from 4 to 6 hours before extrusion.

18. The process as claimed in claim 16 or 17, where the temperature of the PET melt is in the range from 250 to 320°C.

19. The use of a transparent, amorphous sheet as claimed in any one of Claims 1 to 13 for internal applications and in exhibitions.

**Revendications**

1. Plaque transparente amorphe, ayant une épaisseur dans l'intervalle de 1 à 20 mm, qui contient comme constituant principal une matière thermoplastique cristallisable, dans laquelle le brillant de surface, mesuré selon la norme DIN 67530 (angle de mesure 20°), est supérieur à 130, la transmission de la lumière, mesurée selon la norme ASTM D 1003, est supérieure à 84%, et le voile de la plaque, mesuré selon la norme ASTM D 1003, est inférieur à 15%.

2. Plaque selon la revendication 1, dans laquelle la matière thermoplastique cristallisable est choisie parmi l'utilisation du polytéréphtalate d'éthylène, du polytéréphtalate de butylène, d'un polymère et d'un copolymère de cyclooléfine.

3. Plaque selon la revendication 2, dans laquelle on utilise comme matière thermoplastique cristallisable le polytéréphtalate d'éthylène.

4. Plaque selon la revendication 3, dans laquelle le polytéréphtalate d'éthylène contient du polytéréphtalate d'éthylène recyclé.

5. Plaque selon la revendication 3 ou 4, dans laquelle ne se produit aucune fracture au cours de la mesure de la résilience $a_n$ selon Charpy, mesurée selon la norme ISO 179/1D.

6. Plaque selon l'une des revendications 3 à 5, dans laquelle la résistance aux chocs $a_k$ de la plaque selon Izod, mesurée selon la norme ISO 180/1A se situe dans le domaine de 2,0 à 8,0 kJ/m$^2$.

7. Plaque selon l'une des revendications 3 à 6, dans laquelle la qualité d'image, mesurée selon la norme ASTM D 1003 sous un angle inférieur à 2,5°, se situe au-dessus de 96%.

8. Plaque selon l'une des revendications 3 à 7, dans laquelle le polytéréphtalate d'éthylène présente un point de fusion des cristallites, mesuré par DSC avec une vitesse de montée en température de 10°C/min, dans l'intervalle de 220° à 280°C.

9. Plaque selon l'une des revendications 3 à 8, dans laquelle le polytéréphtalate d'éthylène présente une température de cristallisation, mesurée par DSC avec une vitesse de montée en température de 10°C/min., dans l'intervalle de 75° à 280°C.

10. Plaque selon l'une des revendications 3 à 9, dans laquelle le polytéréphtalate d'éthylène présente une cristallinité qui se situe dans le domaine de 5 à 65%.

11. Plaque selon l'une des revendications 3 à 10, dans laquelle le polytéréphtalate d'éthylène utilisé présente une viscosité standard SV (DCE), mesurée dans l'acide dichloroacétique selon la norme DIN 53728, qui est située dans le domaine de 800 à moins de 1800.

12. Plaque selon la revendication 11, dans laquelle le polytéréphtalate d'éthylène utilisé présente une viscosité standard SV (DCE), mesurée dans l'acide dichloroacétique selon la norme DIN 53728, qui est située dans le domaine de 800 jusqu'à 1400.

13. Plaque selon l'une des revendications 1 à 12, dans laquelle la plaque a un degré de cristallinité de moins de 5%.

14. Procédé de fabrication d'une plaque transparente amorphe selon l'une des revendications 1 à 13, qui comprend les étapes suivantes consistant à : fondre la matière thermoplastique cristallisable dans l'extrudeuse, mettre en forme la matière fondue à travers une buse, en ensuite calibrer, glacer et réfrigérer dans la calandre finisseuse avec au moins deux cylindres, avant de mettre la plaque à dimensions, dans lequel le premier cylindre de la calandre finisseuse présente une température, qui se situe dans l'intervalle de 50 à 80°C.

15. Procédé selon la revendication 14, dans lequel la matière thermoplastique cristallisable est séchée avant la fusion.

16. Procédé selon la revendication 14 ou 15, dans lequel la matière thermoplastique cristallisable est le polytéréphtalate d'éthylène.

17. Procédé selon la revendication 16, dans lequel le polytéréphtalate d'éthylène est séché pendant 4 à 6 heures à 160 à 180°C avant l'extrusion.

18. Procédé selon la revendication 16 ou 17, dans lequel la température du PET fondu se situe dans l'intervalle de 250 à 320°C.

19. Utilisation d'une plaque transparente amorphe selon l'une des revendications 1 à 13 pour des utilisations intérieures et dans l'aménagement d'expositions.

Fig. 1

## Fig. 2a
I-KALANDER

## Fig. 2b
F-KALANDER

## Fig. 2c
L-KALANDER

## Fig. 2d
S-KALANDER

## Fig. 2

EP 0 828 596 B1